# EUROPEAN PATENT SPECIFICATION

(11) **EP 0 299 905 B1**
(45) Date of publication and mention of the grant of the patent: **30.06.1993**
(21) Application number: 88630135.7
(22) Date of filing: 14.07.1988
(51) Int. Cl.: C04B 35/65, C04B 35/58, C22C 1/02, B22F 3/26

(54) **Process for preparing self-supporting bodies and products made thereby**
Verfahren zur Herstellung selbsttragender Körper und danach hergestellte Produkte
Procédé de préparation de corps autoportants et produits préparés selon ce procédé

(30) Priority: 15.07.1987 US 73533
(43) Date of publication of application: 18.01.1989
(73) Proprietor: LANXIDE TECHNOLOGY COMPANY, LP., Newark Delaware 19711 (US)
(72) Inventor: White, Danny R., Elkton Maryland 21921 (US); Aghajanian, Michael K., Bel Air Maryland 21014 (US); Claar, Dennis T., Newark Delaware 19711 (US)
(74) Representative: Andrae, Steffen, Dr.

(56) References cited:
- EP-A- 0 193 292
- EP-A- 0 234 704
- EP-A- 0 239 520

## Description

This invention relates generally to a novel method of preparing self-supporting bodies, and to novel products made thereby. In its more specific aspects, this invention relates to a method of producing self-supporting bodies comprising one or more boron-containing compounds, e.g. a boride or a boride and carbide, by reactive infiltration of a molten parent metal into a bed or mass containing boron carbide and, optionally, one or more inert fillers, to form the body.

### Background of the Present Invention

In recent years, there has been an increasing interest in the use of ceramics for structural applications historically served by metals. The impetus for this interest has been the superiority of ceramics with respect to certain properties, such as corrosion resistance, hardness, wear resistance, modulus of elasticity, and refractory capabilities when compared with metals.

However, a major limitation on the use of ceramics for such purposes is the feasibility and cost of producing the desired ceramic structures. For example, the production of ceramic boride bodies by the methods of hot pressing, reaction sintering and reaction hot pressing is well known. In the case of hot pressing, fine powder particles of the desired boride are compacted at high temperatures and pressures. Reaction hot pressing involves, for example, compacting at elevated temperatures and pressures boron or a metal boride with a suitable metal-containing powder. U.S. Patent No. 3,937,619 to Clougherty describes the preparation of a boride body by hot pressing a mixture of powdered metal with a powdered diboride, and U.S. Patent No. 4,512,946 to Brun describes hot pressing ceramic powder with boron and a metal hydride to form a boride composite.

However, these hot pressing methods require special handling and expensive special equipment, they are limited as to the size and shape of the ceramic part produced, and they typically involve low process productivities and high manufacturing cost.

A second major limitation on the use of ceramics for structural applications is their general lack of toughness (i.e. damage tolerance or resistance to fracture). This characteristic tends to result in sudden, easily induced, catastrophic failure of ceramics in applications involving even rather moderate tensile stresses. This lack of toughness tends to be particularly common in monolithic ceramic boride bodies.

One approach to overcome this problem has been to attempt to use ceramics in combination with metals, for example, as cermets or metal matrix composites. The objective of this approach is to obtain a combination of the best properties of the ceramic (e.g. hardness and/or stiffness) and the metal (e.g. ductility). U.S. Patent 4,585,618 to Fresnel, et al., discloses a method of producing a cermet whereby a bulk reaction mixture of particulate reactants, which react to produce a sintered self-sustaining ceramic body, is reacted while in contact with a molten metal. The molten metal infiltrates at least a portion of the resulting ceramic body. Exemplary of such a reaction mixture is one containing titanium, aluminum and boron oxide (all in particulate form), which is heated while in contact with a pool of molten aluminum. The reaction mixture reacts to form titanium diboride and alumina as the ceramic phase, which is infiltrated by the molten aluminum. Thus, this method uses the aluminum in the reaction mixture principally as a reducing agent. Further, the external pool of molten aluminum is not being used as a source of precursor metal for a boride forming reaction, but rather it is being utilized as a means to fill the pores in the resulting ceramic structure. This creates cermets which are wettable and resistant to molten aluminum. These cermets are particularly useful in aluminum production cells as components which contact the molten aluminum produced but preferably remain out of contact with the molten cryolite. There is further no employment of boron carbide in this process.

European Application 0,113,249 to Reeve, et al. discloses a method for making a cermet by first forming in situ dispersed particles of a ceramic phase in a molten metal phase, and then maintaining this molten condition for a time sufficient to effect formation of an intergrown ceramic network. Formation of the ceramic phase is illustrated by reacting a titanium salt with a boron salt in a molten metal such as aluminum. A ceramic boride is developed in situ and becomes an intergrown network. There is, however, no infiltration, and further the boride is formed as a precipitate in the molten metal. Both examples in the application expressly state that no grains were formed of TiAl₃, AlB₂, or AlB₁₂, but rather TiB₂ is formed demonstrating the fact that the aluminum is not the metal precursor to the boride. There is further no suggestion of using boron carbide as a precursor material in the process.

U.S. Patent No. 3,864,154 to Gazza et al. discloses a ceramic-metal system produced by infiltration. An AlB₁₂ compact was impregnated with molten aluminum under vacuum to yield a system of these components. Other materials prepared included SiB₆-Al, B-Al; B₄C-Al/Si; and AlB₁₂-B-Al. There is no suggestion whatsoever of a reaction, and no suggestion of making composites involving a reaction with the infiltrating metal nor of any reaction product embedding an inert filler or being part of a composite.

U.S. Patent 4,605,440 to Halverson, et al., discloses that in order to obtain B₄C-Al composites, a B₄C-Al compact (formed by cold pressing a homogeneous mixture of B₄C and Al powders) is subjected to sintering in either a vacuum or an argon atmosphere. There is no infiltration of molten metal from a pool or body of molten precursor metal into a preform. Further, there is no mention of a reaction product embedding an inert filler in order to obtain composites utilizing the favorable properties of the filler.

While these concepts for producing cermet materials have in some cases produced promising results, there is a general need for more effective and economical methods to prepare boride-containing materials.

### Summary of the Invention

In accordance with the present invention, self-supporting ceramic bodies are produced utilizing a parent metal infiltration and reaction process (i.e. reactive infiltration) in the presence of boron carbide. A bed or mass of boron carbide is infiltrated by molten parent metal, and the bed may be comprised entirely of boron carbide, resulting in a self-supporting body comprising one or more parent metal boron-containing compounds, which compounds include a parent metal boride or a parent metal boro carbide, or both, and typically also may include a parent metal carbide. Alternatively, the mass to be infiltrated may contain one or more inert fillers admixed with the boron carbide to produce a composite by reactive infiltration, which composite comprises a matrix of one or more boron-containing compounds and also may include a parent metal carbide. In both embodiments, the final product may include a metal as one or more metallic constituents of the parent metal. The reactant concentrations and process conditions may be altered or controlled to yield a body containing varying volume percents of ceramic compounds, metal and/or porosity.

Broadly, in the method of this invention, a mass comprising boron carbide is placed adjacent to or contacted with a body of molten metal or metal alloy, which is melted in a substantially inert environment within a particular temperature envelope. The molten metal infiltrates the mass and reacts with the boron carbide to form one or more reaction products. The boron carbide is reducible, at least in part, by the molten parent metal to form the parent metal boron-containing compound, e.g. a parent metal boride and/or boro compound, under the temperature conditions of the process. Typically a parent metal carbide is also produced, and in certain cases a parent metal boro carbide is produced. At least a portion of the reaction product is maintained in contact with the metal, and molten metal is drawn or transported toward the unreacted boron carbide by wicking or capillary action. This transported metal forms additional parent metal boride, carbide, and/or boro carbide, and the formation or development of a ceramic body is continued until the parent metal or boron carbide has been consumed, or until the reaction temperature is altered to be outside the reaction temperature envelope. The resulting structure comprises one or more of a parent metal boride, a parent metal boro compound, a parent metal carbide, a metal (which as used herein is intended to include alloys and intermetallics), or voids, or a combination thereof, and these several phases may or may not be interconnected in one or more dimensions. The final volume fractions of the boron-containing compounds (i.e. boride and boro compounds), carbon-containing compounds, and metallic phases, and the degree of interconnectivity, can be controlled by changing one or more conditions, such as the initial density of the boron carbide body, the relative amounts of boron carbide and parent metal, alloying the parent metal, dilution of the boron carbide with a filler, temperature and time. Typically, the mass of boron carbide will be at least somewhat porous so as to allow for wicking the parent metal through the reaction product. Wicking occurs apparently either because any volume change on reaction does not fully close off pores through which parent metal can continue to wick, or because the reaction product remains permeable to the molten metal due to such factors as surface energy considerations which render at least some of its grain boundaries permeable to the parent metal.

In another embodiment, a composite is produced by the transport of molten parent metal into a bedding of boron carbide admixed with one or more inert filler materials. In this embodiment, boron carbide is incorporated into a suitable filler material, which then is placed adjacent to or in contact with the molten parent metal. This setup may be supported on or in a separate bed that is substantially non-wettable by and non-reactive with the molten metal under the process conditions. The molten parent metal infiltrates the boron carbide-filler mixture and reacts with the boron carbide to form one or more boron-containing compounds. The resulting self-supporting ceramic-metal composite typically is a dense microstructure which comprises a filler embedded by a matrix comprising boron-containing compound(s), and also may include a carbide and metal. Only a small amount of boron carbide is required to promote the reactive infiltration process. Thus, the resulting matrix can vary in content from one composed primarily of metallic constituents thereby exhibiting certain properties characteristic of the parent metal; to cases where a high concentration of the boron carbide is used in the process, thereby producing a significant boron-containing compound(s) phase which, together with any carbon-containing compounds, dominate the properties of the matrix. The filler may serve to enhance the properties of the composite, lower the raw materials cost of the composite, or moderate the kinetics of the boron-containing compound(s) and/or carbon-containing compound formation reactions and the associated rate of heat evolution.

In a further embodiment, the material to be infiltrated is shaped into a preform corresponding to the geometry of the desired final composite. Subsequent reactive infiltration of the preform by the molten parent metal results in a composite having the net shape or near net shape of the preform, thereby minimizing expensive final machining and finishing operations.

### Definitions

As used in this specification and the appended claims, the terms below are defined as follows:
"Parent metal" refers to that metal, e.g. zirconium, which is the precursor for the polycrystalline oxidation reaction product, that is, the parent metal boride or other parent metal boron compound, and includes that metal as a pure or relatively pure metal, a commercially available metal having impurities and/or alloying constituents therein, and an alloy in which that metal precursor is the major constituent; and when a specific metal is mentioned as the parent metal, e.g. zirconium, the metal identified should be read with this definition in mind unless indicated otherwise, by the context.

"Parent metal boride" and "parent metal boro compounds" mean a reaction product containing boron formed upon reaction between boron carbide and the parent metal and includes a binary compound of boron with the parent metal as well as ternary or higher order compounds.

"Parent metal carbide" means a reaction product containing carbon formed upon reaction of carbide and parent metal.

### Brief Description of the Drawings

FIGURE 1 is a schematic elevational view in cross-section showing a parent metal ingot embedded in a particulate of boron carbide within a refractory crucible, to be processed in accordance with the invention.

FIGURE 2 is a schematic elevational view in cross-section showing a parent metal ingot positioned adjacent a preform of boron carbide and embedded in an inert bed contained within a refractory crucible, to be processed in accordance with the invention.

FIGURE 3 is a photomicrograph at 1000X magnification of a section of a ceramic composite formed by the method described in Example I.

FIGURE 4 is a photomicrograph at 1500X magnification of a section of a ceramic composite formed by the method described in Example VI.

FIGURE 5 is a photomicrograph at 1500X magnification of a section of a ceramic composite formed by the method of Example VIII.

### Detailed Description of the Invention and Preferred Embodiments

In accordance with the invention, a self-supporting body is produced by the reactive infiltration of a molten parent metal with boron carbide to form a polycrystalline ceramic-containing body comprising the reaction product(s) of the parent metal with boron carbide, and also may include one or more constituents of the parent metal. The boron carbide, typically a solid at the process conditions, is preferably in fine particulate or powdered form. The environment or atmosphere for the process is chosen to be relatively inert or nonreactive under the process conditions. Argon or vacuum, for example, would be suitable process atmospheres. The resulting product comprises one or more of (a) a parent metal boride, (b) a boro compound, (c) usually a parent metal carbide, and (d) metal. The constituents and proportions in the product depend largely on the choice and composition of parent metal and the reaction conditions. Also, the self-supporting body produced may exhibit porosity or voids.

In the preferred embodiments of the present invention, the parent metal and a mass or bedding of boron carbide are positioned adjacent each other so that reactive infiltration will be in the direction towards and into the bedding. The bedding, which may be preshaped, may include a filler material, such as a reinforcing filler, which is substantially inert under the process conditions. The reaction product can grow into the bedding without substantially disturbing or displacing it. Thus, no external forces are required which might damage or disturb the arrangement of the bedding and no awkward or costly high temperature, high pressure processes and facilities are required to create the reaction product. Reactive infiltration of the parent metal into and with the boron carbide, which preferably is in particulate or powdered form, forms a composite typically comprising a parent metal boride and a parent metal boro compound. With aluminum as the parent metal, the product may comprise an aluminum boro carbide (e.g. Al₃B₄₈C₂, AlB₁₂C₂, AlB₂₄C₄), and also may include metal, e.g. aluminum, and possibly other unreacted or unoxidized constituents of the parent metal. If zirconium is the parent metal, the resulting composite comprises zirconium boride and zirconium carbide. Also, zirconium metal may be present in the composite.

Although the present invention is hereinafter described with particular reference to certain preferred embodiments in which the parent metal is zirconium or aluminum, this is for illustrative purposes only. Other parent metals also may be used such as silicon, titanium, hafnium, lanthanum, iron, calcium, vanadium, niobium, magnesium and beryllium, and examples for several such parent metals are given below.

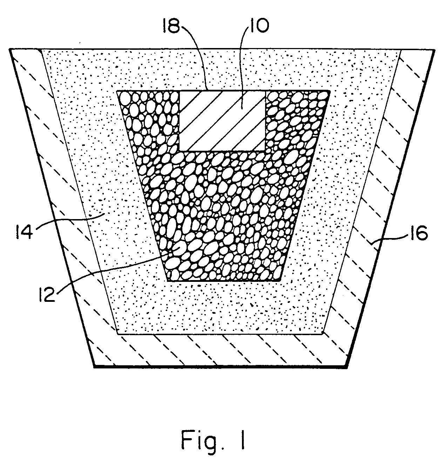

Referring to FIGURE 1, the parent metal 10 as the precursor, e.g. zirconium, is formed into an ingot, billet, rod, plate, or the like. The metal is at least partially embedded in particulate boron carbide 12, preferably having a particle size of from about 0.1 µm to 100 µm. This setup or assembly is surrounded by an inert material 14, typically in particulate form, which is not-wettable by and non-reactive with the molten metal under the process conditions, and contained within a crucible 16 or other refractory vessel. The top surface 18 of the parent metal may be exposed, or the parent metal may be completely embedded or surrounded by the boron carbide, and also the inert bed 14 may be omitted. This assembly is placed in a furnace and heated, preferably in an inert atmosphere such as argon, above the melting point of the parent metal but preferably below the melting point of the desired reaction product so as to form a body or pool of molten metal. It should be understood that the operable temperature range or preferred temperature may not extend over this entire interval. The temperature range will depend largely upon such factors as the composition of the parent metal and the desired phases in the resulting composite. Molten metal contacts the boron carbide, and a parent metal boride (e.g. zirconium diboride) is formed as the reaction product. Upon continued exposure to the boron carbide, the remaining molten metal is progressively drawn through the reaction product in the direction of and into the mass containing the boron carbide, to provide continued formation of reaction product at the interface between the molten metal and boron carbide. The product produced by this method comprises the reaction product(s) of the parent metal with the boron carbide, or may comprise a ceramic-metal composite to include further one or more unreacted or non-oxidized constituents of the parent metal. A substantial amount of the boron carbide is reacted to form the reaction product(s), preferably this amount being at least about 50% and most preferably at least about 90%. The ceramic crystallites formed as the reaction product by the process may or may not be interconnected, but preferably are interconnected in three dimensions, and the metallic phases and any voids in the product are normally at least partially interconnected. Any porosity tends to result from a partial or nearly complete depletion of the parent metallic phase in favor of the formation of additional reaction product (as in the case where stoichiometric reactants or excess boron carbide is present), but the volume percent of voids will depend on such factors as temperature, time, type of parent metal, and the porosity of the mass of boron carbide.

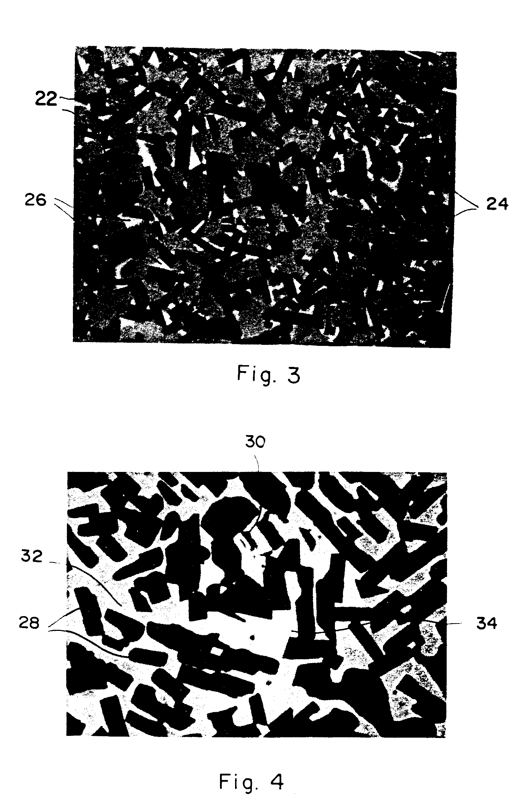

It has been observed that products made in accordance with this invention using zirconium, titanium and hafnium as the parent metal form a parent metal boride characterized by a platelet-like structure. These platelets typically are unaligned or randomly oriented, as can be seen in Figures 3, 4 and 5. This platelet-like structure and the metallic phase appear to account at least in large part for the extraordinarily high fracture toughness of this composite, about 12 mega Pascals meters^{1/2} or higher, because of crack deflection and/or pull-out mechanisms.

In another aspect of the invention, there is provided a self-supporting body, including composite bodies, comprising a matrix of reaction product, and, optionally metallic constituents, embedding a substantially inert filler. The matrix is formed by the reactive infiltration of a parent metal into a bed or mass of the filler intimately mixed with boron carbide. The filler material may be of any size or shape, and may be oriented with respect to the parent metal in any manner as long as the direction of development of the reaction product will be towards and will engulf at least a portion of the filler material without substantially disturbing or displacing it. The filler may be composed of or comprise any suitable material, such as ceramic and/or metal fibers, whiskers, particulates, powders, rods, wires, wire cloth, refractory cloth, plates, platelets, reticulated foam structure, solid or hollow spheres, etc. A particularly useful filler is alumina, but other oxides and ceramic fillers may be used depending on the starting materials and the end properties desired. The volume of filler material may be a loose or bonded array or arrangement, which array has interstices, openings, intervening spaces, or the like, to render the filler material permeable to the infiltration of molten parent metal. Further the filler material may be homogeneous or heterogeneous. If desired, these materials may be bonded with any suitable binding agent (e.g. Avicil PH 105, from FMC Co.) which does not interfere with the reactions of this invention or leave any undesirable residual by-products within the final composite product. A filler which would tend to react excessively with the boron carbide or with the molten metal during processing may be coated so as to render the filler inert to the process environment. For example, carbon fiber, if used as a filler in conjunction with aluminum as the parent metal will tend to react with molten aluminum, but this reaction can be avoided if the fiber is first coated, e.g. with alumina.

A suitable refractory container holding the parent metal and a bed or volume of filler with admixed boron carbide properly oriented to permit reactive infiltration of the parent metal into the filler bed and proper development of the composite, is placed in a furnace, and this lay-up is heated to a temperature above the melting point of the parent metal. At these elevated temperatures, the molten parent metal infiltrates the permeable filler by a wicking process and reacts with the boron carbide, thereby producing the desired ceramic or ceramic-metal composite body.

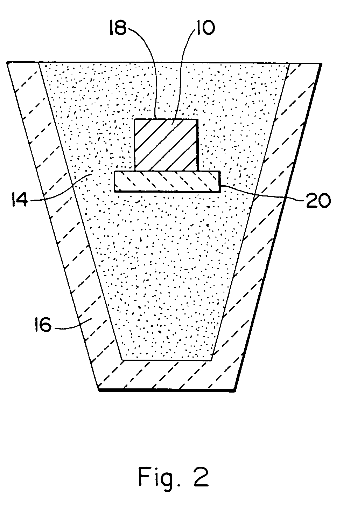

A composite made by practicing this invention is illustrated in FIGURE 2. The boron carbide, together with any desired inert filler materials, is fabricated into a preform with a shape corresponding to the desired geometry of the final composite. The preform 20 is superimposed with the parent metal precursor 10 and the assembly is surrounded by the inert material 14 contained within the crucible 16. The top surface 18 of the parent metal may or may not be exposed. The preform 20 may be prepared by any of a wide range of conventional ceramic body formation methods (such as uniaxial pressing, isostatic pressing, slip casting, sedimentation casting, tape casting, injection molding, filament winding for fibrous materials, etc.) depending on the characteristics of the filler. Initial bonding of the filler particles, whiskers, fibers, or the like, prior to reactive infiltration may be obtained through light sintering or by use of various organic or inorganic binder materials which do not interfere with the process or contribute undesirable by-products to the finished material. The preform 20 is manufactured to have sufficient shape integrity and green strength, and should be permeable to the transport of molten metal, preferably having a porosity of between about 5 and 90% by volume and more preferably between about 25 and 75% by volume. In the case of an aluminum parent metal. suitable filler materials include, for example, silicon carbide, titanium diboride, alumina and aluminum dodecaboride (among others), and as particulates typically having a particle size of from about 1.41 mm - 12 µm (14 to 1000 mesh), but any admixture of filler materials and particle sizes may be used. The preform 20 is then contacted with molten parent metal on one or more of its surfaces for a time sufficient to complete infiltration of the matrix to the surface boundaries of the preform. The result of this preform method is a ceramic-metal composite body of a shape closely or exactly representing that desired in the final product, thus minimizing or eliminating expensive final machining or grinding operations.

It has been discovered that infiltration of the permeable filler by the parent metal is promoted by the presence of boron carbide in the filler. A small amount of boron carbide has been shown to be effective, but the minimum can depend upon a number of factors such as type and particle size of the boron carbide, type of parent metal, type of filler, and process conditions. Thus, a wide variation of boron carbide concentrations can be provided in the filler, but the lower the concentration of boron carbide, the higher the volume percent of metal in the matrix. When very low amounts of the boron carbide are used, e.g. one to three weight percent based on the total weight of boron carbide plus filler, the resulting matrix is interconnected metal and a limited amount of parent metal boride and parent metal carbide dispersed in the metal. In the absence of boron carbide, reactive infiltration of the filler may not occur, and infiltration may not be possible without special procedures, such as the application of external pressure to force the metal into the filler.

Because a wide range of boron carbide concentrations in the filler can be used in the process of this invention, it is possible to control or to modify the properties of the completed product by varying the concentration of boron carbide and/or the composition of the bed. When only a small amount of boron carbide is present relative to the amount of parent metal, such that the mass comprises a low density of boron carbide, the composite body or matrix properties are dominated by the properties of the parent metal, most typically ductility and toughness, because the matrix is predominately metal. Such a product may be advantageous for low or mid-range temperature applications. When a large amount of boron carbide is used, as for example when compound(s) having boron carbide particles are densely packed around a filler material or occupy a high percentage of space between constituents of the filler, the resulting body or matrix properties tend to be dominated by the parent metal boride and any parent metal carbide, in that the body or matrix would be harder or less ductile or less tough. If the stoichiometry is closely controlled so as to achieve substantially complete conversion of the parent metal, the resulting product will contain little or no metal, which may be advantageous for high temperature applications of the product. Also, the substantially complete conversion of the parent metal could be significant especially in some high temperature applications, because the boride reaction product is more stable than boron carbide in that boron carbide will tend to react with residual or unoxidized metal, e.g. aluminum, present in the product. Where desired, elemental carbon may be admixed with the boron carbide bed or preform containing boron carbide and a filler. This excess carbon, typically varying from about 5 to 10 weight percent of the total bedding, reacts with the parent metal thereby assuring substantially complete reaction of the metal. This reaction of the metal with the carbon will depend largely on the relative amount of carbon used, the type, e.g. carbon black or graphite, and crystallinity. Selection among these extreme characteristics may be highly desirable to meet the needs of different potential applications for these products.

Also, elemental boron may be admixed with the boron carbide bed (including a bed with filler) to facilitate reactive infiltration, particularly when using aluminum as the parent metal. Such an admixture reduces the cost of the bed relative to all boron, results in the formation of a product containing a boro carbide such as aluminum boro carbide which possesses certain properties comparable to aluminum boride, and prevents the formation of aluminum carbide which is unstable in the presence of moisture and therefore degrades the structural properties of the product. In the admixture, the parent metal reacts with the elemental boron preferentially to form a metal boride, but the boro compound is formed as well.

Additional variations in the characteristics and properties of the composite can be created by controlling the infiltration conditions. Variables which can be manipulated include the nature and size of the particles of boron carbide material, and the temperature and time of infiltration. For example, reactive infiltration involving large boron carbide particles and minimum exposure times at low temperatures will result in a partial conversion of the boron carbide to parent metal boron and parent metal carbon compound(s). As a consequence, unreacted boron carbide material remains in the microstructure, which may impart desirable properties to the finished material for some purposes. Infiltration involving the boron carbide particles, high temperatures and prolonged exposure times (perhaps even to hold at temperature after infiltration is complete) will tend to favor substantially complete conversion of the parent metal to the parent metal boride and carbon compound(s). Preferably, conversion of the boron carbide to the parent metal boride, parent metal boro compound(s) and parent metal carbide is at least about 50%, and most preferably at least about 90%. Infiltration at high temperatures (or a subsequent high temperature treatment) also may result in densification of some of the composite constituents by a sintering process. In addition, as noted previously, the reduction of the amount of available parent metal below that necessary to form the boron and carbon compound(s) and fill the resulting interstices in the material may result in a porous body which also could have useful applications. In such a composite, porosity may vary from about 1 to 25 volume percent, and sometimes higher, depending upon the several factors or conditions enumerated above.

The following Examples illustrate the novel reaction products of this invention and the method by which they are prepared; however, these Examples are illustrative only and they are not intended to limit the invention claimed. The test procedures for measuring certain properties of specimens prepared in these examples were as follows:

The room temperature four-point flexure tests were conducted in a Model 1123 Instron test machine using procedures outlined in U.S. Army MIL-STD-1942 (MR). The specimens were bars measuring 3 x 4 x 50 mm. Their tensile surfaces were surface ground using a 17 µm (500 grit) diamond wheel, and their corners chamfered to eliminate chips and other defects. The steel flexure fixture had a 20 mm inner span and a 40 mm outer span. Flexural strengths were calculated from the peak breaking loads and the specimen and fixture dimensions using elastic beam equations.

The fracture toughness was determined by testing flexural bars measuring 5 x 4 x 50 mm. A chevron notch with an included angle of 60° was machined at the mid lengths of the specimens with a 0.3 mm wide diamond blade. Then, four-point chevron notch flexure tests were conducted by the same methods described for the flexural strengths.

The density was determined by weighing and measuring rectangular blocks.

The elastic modulus was determined by the sonic resonance technique, using the procedure described in ASTM C623-71. The samples measured approximately 5 x 4 x 45 mm, and were all machined with a series of diamond cutting and grinding operations. Three modes of vibration were separately stimulated in each bar, namely, the torsional mode, the flexural mode perpendicular to the 5 mm width, and the flexural mode perpendicular to the 4 mm width. In each case, the fundamental harmonic resonant frequency was determined. The flexural resonances provided measurements of Young's modulus (E), and the torsional resonance provided measurements of the shear modulus (G).

The hardness was determined by using the A scale on a Rockwell hardness tester and following the procedure described in ASTM E18-84. The goal of the tests was to obtain a hardness value representative of the composite as a whole rather than of single phase regions.

### Example 1

A 5.1 cm (2-inch) square by 0.95 cm (3/8-inch) thick preform was prepared by admixing 95% by weight B₄C [5 µm (1000 grit)] and 5% by weight of an organic binder (Acrawax-C from Lonza, Inc.), then cold pressing the composition in a steel die with the specified geometry at 34.48 MPa (5,000 psi). A 5.1 cm (2-inch) square by 0.95 cm (3/8-inch) thick plate of zirconium was placed on top of, and in contact with, the B₄C particulate preform and the entire setup was placed in a graphite mold.

The assembly, consisting of the graphite mold and its contents, was placed in a resistance-heated vacuum furnace supplied with argon gas flowing at 2 liters/minute. The assembly was heated from room temperature to 450°C over a period of 2.5 hours to burn out the organic binder. It was then heated to a 1950°C setpoint temperature over a five-hour period and maintained at 1950°C for 2 hours. The assembly was allowed to cool for five hours prior to removal from the furnace.

After the assembly was removed from the furnace, the unreacted zirconium was mechanically removed from the surface of the setup by grinding, and a powdered sample of the underlying ceramic composite was recovered and subjected to x-ray diffraction analysis. This analysis showed the presence of ZrB₂, ZrC, and Zr. Further tests revealed that the ceramic composite had the following properties: an average density (g/cm³) of about 6.2; an elastic modulus (GPa) of 380; a flexural strength (MPa) of 875; and a critical stress intensity factor (fracture toughness) of 15 (MPa m^{1/2}).

Figure 3 is a photomicrograph at 1000X magnification of a cross-section of the composite product showing ZrB₂ as 22, ZrC as 24, and Zr as 26. The ZrB₂ phase in this composite appeared in the form of platelets, which are unaligned or randomly oriented.

### Example II

A zirconium metal ingot measuring 1.27 cm (1/2 inch) in diameter and 1.9 cm (3/4 inch) tall was embedded in particulate boron carbide (Atlantic Equipment Engineers, Bergenfield, N. J., B₄C 99.7%, 1-5 µm) contained within an alumina crucible. The assembly, consisting of the alumina crucible and its contents, was placed in an induction furnace supplied with argon gas flowing at 300 cm³/minute. The assembly was heated to 1800°C (as measured by an optical pyrometer) over a period of 6 minutes and then maintained at 1800°C for 4 minutes before it was allowed to cool.

After the assembly was removed from the furnace, a powdered sample of the resulting ceramic composite was recovered and subjected to x-ray diffraction analysis. This analysis showed the presence of ZrB₂, ZrC and Zr. The ZrB₂ phase in this composite appeared in the form of platelets.

### Example III

A preform measuring 5.7 cm (2¼-inch) square and 0.64 cm (½-inch) thick was prepared by admixing 93% by weight boron carbide (B₄C) particles of 45 µm (320 mesh) size and 7% by weight of organic binder (Avicil PH 105 from FMC Co.) and then cold pressing the admixture in a steel die with the specified geometry at 69 MPa (10,000 psi). A 5.1 cm (2-inch) square and 1.27 cm (½-inch) thick aluminum alloy, designated 1100, was placed on top of, and in contact with, the B₄C preform and the entire setup was embedded in alumina particles [E38 Alundum from Norton Co., 216 µm (90 grit)] contained in a refractory vessel, as illustrated in Figure 2.

The assembly, consisting of the refractory vessel and its contents, was heated to a 1200° C setpoint temperature, over a ten-hour period, in a resistance heated vacuum furnace supplied with argon gas flowing at 1 liter/min. After the 1200° C temperature was maintained for 24 hours, the assembly was allowed to cool for six hours prior to removal from the furnace.

After the assembly was removed from the furnace, the unreacted aluminum on the surface of the setup was removed mechanically and a small amount of the underlying ceramic composite was reduced to powder. This powder was subjected to x-ray diffraction analysis which showed the presence of Al, B₄C, Al₂O₃ and Al₈B₄C₇. Further tests showed that the resulting ceramic composite had the following properties: a density (g/cm³) of 2.58; an elastic modulus (GPa) of 189; a hardness (Rockwell A) of 46; a flexural strength (MPa) of 254 ± 3; and a fracture toughness (MPam^{1/2}) of 10.2 ± 0.1.

### Example IV

A preform measuring 5.7 cm (2¼-inch) square and 0.64 cm (½-inch) thick was prepared from a uniform mixture comprised of 94% by weight B₄C/B (in an admixture of 50% by weight, 45 µm (320 mesh) B₄C; and 50% by weight, 38 µm and finer B), and 6% by weight of organic binder (Avicil PH 105 from FMC Co.) The preform was prepared by cold pressing the mixture in a steel die with the specified geometry at 69 MPa (10,000 psi). A 5.1 cm (two-inch) square and 0.64 cm (½-inch) thick aluminum alloy, designated 1100, was placed on top of, and in contact with, the B₄C/B particulate preform and the entire setup was embedded in alumina particles [38 Alundum from Norton, Co., 1.04 mm (24 grit)] contained in a refractory vessel, as illustrated in FIGURE 2.

The assembly, consisting of the refractory vessel and its contents, was placed in a resistance-heated tube furnace supplied with argon gas flowing at 300 cm³/min, heated to a 1200°C setpoint temperature over a ten-hour period, and maintained at 1200°C for 36 hours. The assembly was allowed to cool for ten hours prior to removal from the furnace.

After the assembly was removed from the furnace, the unreacted aluminum on the surface of the setup was mechanically removed and a powdered sample of the underlying ceramic composite was subjected to x-ray diffraction analysis. This analysis showed that the ceramic composite contained Al, β-AlB₁₂, Al₃B₄₈C₂, and an unidentified phase, with a "d" spacing (lattice spacing) of 2.926, 2.679, 2.087, 1.84 and 1.745 Å with relative intensities of 100, 36, 40, 20 and 73, respectively. Further tests determined that the composite had the following properties: a density (g/cm³) of 2.58; an elastic modulus (GPa) of 215; a flexural strength (MPa) of 196±9; and a fracture toughness (MPa m^{1/2}) of 8.1 ± 0.3.

### EXAMPLE V

A preform measuring 5.7 cm (2¼-inch) square and 0.64 cm (½-inch) thick was prepared by the technique described in Example I except that the uniform mixture here was comprised of 94% by weight B₄C/B (in an admixture of 50% by weight, 45 µm (320 mesh) B₄C; and 50% by weight, 38 µm and finer B), and 6% by weight of the same binder. A 5.1 cm (two-inch) square and 1.27 cm (½-inch) thick plate of aluminum alloy Al-10Si-3Mg (10% by weight Si, 3% by weight Mg, and the balance Al) was placed on top of, and in contact with, the B₄C/B particulate preform and the entire setup was embedded in alumina particles [38 Alundum from Norton, Co., 1.04 mm (24 grit)] contained in a refractory vessel, as illustrated in Figure 2.

The assembly, consisting of the refractory vessel and its contents, was placed in a resistance-heated vacuum furnace supplied with argon gas flowing at 1 liter/min, heated to a 1200°C setpoint temperature over a ten-hour period, and maintained at 1200°C for 12 hours. The assembly was allowed to cool for five hours prior to removal from the furnace.

After the assembly was removed from the furnace, the unreacted aluminum on the surface of the setup was mechanically removed, and a powdered sample of the underlying ceramic composite was recovered and subjected to x-ray diffraction analysis. This analysis showed that the ceramic composite contained Al, Si, B₄C, β-AlB₁₂, Al₂O₃, and Al₈B₄C₇. Further tests showed that the composite had the following properties: a density (g/cm³) of 2.55; an elastic modulus (GPa) of 213; a hardness (Rockwell A) of 57; a flexural strength (MPa) of 231 ± 31; and a fracture toughness (MPa m^{1/2}) of 9.1 ± 0.1.

### EXAMPLE VI

A 99.64% pure titanium metal ingot (grade 2) measuring 1.6 cm (5/8 inch) in diameter and 1.9 cm (3/4 inch) tall was embedded in particulate boron carbide (Atlantic Equipment Engineers, Bergenfield, N.J., B₄C 99.7%, 1-5 µm) contained within an alumina crucible. The assembly, consisting of the alumina crucible and its contents, was placed in an induction furnace supplied with argon gas flowing at 300 cm³/minute. The assembly was heated to the point where the titanium melted (about 1700-1750°C as measured by an optical pyrometer) over a 4 minute period, and then allowed to cool.

After the assembly was removed from the furnace, a powdered sample of the resulting ceramic composite was recovered and subjected to x-ray diffraction analysis. This analysis showed the presence of TiB₂, TiB, TiC and Ti.

FIGURE 4 is a photomicrograph at 1500X magnification of a cross-section of the composite product showing TiB₂ as 28, TiB as 30, TiC as 32 and Ti as 34. The TiB₂ phase appeared in platelet-like structure.

### EXAMPLE VII

A cylindrical sample of 99.64% pure titanium (grade 2) measuring 1.6 cm (5/8 inch) diameter by 1.9 cm (3/4 inch) in length was embedded in boron carbide [5 µm (1000 grit)] contained in an alumine crucible. The assembly, consisting of the alumina crucible and its contents, was placed in a resistance heated vacuum furnace supplied with argon gas flowing at 500 cm³/min. The assembly was heated to a setpoint temperature of 1750°C over a period of 3 hours, and then maintained at 1750°C for 3 hours and 20 minutes.

After the assembly was removed from the furnace and cooled, a powdered sample of the resulting ceramic composite product was recovered and subjected to x-ray diffraction analysis. This analysis showed the presence of TiB₂, TiC and Ti₃B₄.

A sample of the product was subjected to a Knoop micro-hardness test as described in ASTM E384-73, using a 200 gf load, which indicated a microhardness of 1815-1950 kg/mm².

### EXAMPLE VIII

A 98.20% pure hafnium metal ingot measuring 0.95 cm (3/8 inch) in diameter and 1.9 cm (3/4 inch) tall was embedded in particulate boron carbide (-325 mesh) contained within an alumina crucible. The assembly, consisting of the alumina crucible and its contents, was placed in an induction furnace supplied with a gas consisting of 1% hydrogen and 99% argon, by volume, flowing at 500 cm³/minute. The assembly was heated to 2300°C (as measured by an optical pyrometer) over an 8 minute period, and then allowed to cool.

After the assembly was removed from the furnace, examination of the recovered sample showed that there was a very clean cylindrical void where the hafnium ingot had been. This indicates that the shape replication ability of this system is good. A powdered sample of the ceramic composite product obtained through this experiment was recovered and subjected to x-ray diffraction analysis. This analysis showed the presence of HfB₂, HfC, Hf and minor amounts of B₄C.

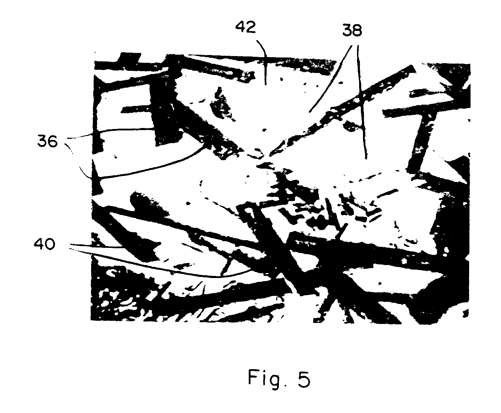

FIGURE 5 is a photomicrograph at 1500X magnification of a cross-section of the composite product showing HfB₂ as 36, HfC as 38, B₄C as 40 and Hf as 42. The HfB₂ had a platelet structure.

As described above, other parent metals, different concentrations of starting materials and other variations such as density in packing, nature of the boron carbide particles, time and temperature may be used to alter or control the final product. Materials of this type would be useful for such applications as engine or rocket components.

## Claims

1. A method for producing a self-supporting body, which comprises: (a) selecting a parent metal, (b) heating said parent metal in a substantially inert atmosphere to a temperature above its melting point to form a body of molten metal, and contacting said body of molten parent metal with a mass comprising boron carbide, (c) maintaining said temperature for a time sufficient to permit infiltration of molten parent metal into said mass and to permit reaction of molten parent metal with said boron carbide to form one or more boron-containing compounds, and (d) continuing said infiltration and reaction for a time sufficient to produce said self-supporting body comprising one or more parent metal boron-containing compounds.

2. The method according to Claim 1 including forming said mass by admixing said boron carbide with an inert filler, permitting said infiltration and reaction into said formed mass to embed said filler, and producing a composite as said self-supporting body.

3. The method according to Claim 1 or Claim 2 wherein said body includes a metallic phase.

4. The method according to Claim 1 or Claim 2 wherein said self-supporting body comprises a parent metal boride compound and parent metal carbon compound formed upon reaction of said boron carbide and said parent metal.

5. The method according to Claim 1 or Claim 2 wherein said boron carbide is present in at least a stoichiometric amount with respect to the parent metal infiltrated into said mass and said reaction is continued for a sufficient time to consume substantially all of said parent metal.

6. The method according to Claim 1 or Claim 2 wherein said parent metal comprises at least one metal selected from the group consisting of aluminum, titanium, zirconium, silicon, hafnium, lanthanum, iron, calcium, vanadium, niobium, and beryllium.

7. The method according to Claim 4 wherein said parent metal comprises at least one metal selected from the group consisting of aluminum, titanium, zirconium, and hafnium.

8. The method according to Claim 1 or Claim 2 wherein said parent metal comprises aluminum, and said self-supporting body comprises an aluminum compound selected from the group consisting of aluminum boride, an aluminum boro carbide, and mixtures thereof.

9. The method according to Claim 1 or Claim 2 wherein said parent metal comprises zirconium, and said self-supporting body comprises a zirconium compound selected from the group consisting of a boride of zirconium or a mixture of a boride of zirconium and a carbide of zirconium.

10. The method according to Claim 9 wherein said self-supporting body also includes zirconium.

11. The method according to Claim 1 or Claim 2 wherein said mass is a preform of predetermined shape, and said infiltration and said reaction into said preform produce a self-supporting body having the configuration of said preform.

12. The method according to Claim 2 wherein said filler comprises at least one filler selected from the group consisting of fibers, whiskers, particulates, powders, rods, wires, wire cloth, refractory cloth, reticulated foam, plates, platelets, solid spheres, and hollow spheres.

13. The method according to Claim 11 wherein said filler has a protective precoat.

14. The method according to Claim 2 or Claim 13 wherein said filler comprises at least one filler selected from the group consisting of alumina, or carbon with a protective precoat.

15. The method according to Claim 1 or Claim 2 wherein said parent metal comprises titanium, and said self-supporting body comprises a titanium compound selected from the group consisting of a boride of titanium and a mixture of a boride of titanium and a carbide of titanium.

16. The method according to Claim 1 or Claim 2 wherein said parent metal comprises hafnium, and said self-supporting body comprises a hafnium compound selected from the group consisting of a boride of hafnium and a mixture of boride of hafnium and a carbide of hafnium.

17. The method according to Claim 15 wherein said self-supporting body also includes titanium.

18. The method according to Claim 16 wherein said self-supporting body also includes hafnium.

19. The method of Claim 1 or Claim 2 wherein at least one of said parent metal boron-containing compounds exhibits a platelet-like structure.

20. The method of Claim 9 wherein said boride of zirconium exhibits a platelet-like structure.

21. The method of Claim 15 wherein said boride of titanium exhibits a platelet-like structure.

22. The method of Claim 16 wherein said boride of hafnium exhibits a platelet-like structure.

23. A method for producing a self-supporting body comprising: (a) selecting a parent metal, (b) heating said parent metal in a substantially inert atmosphere to a temperature above its melting point to form a body of molten metal, and contacting said body of molten parent metal with a mass comprising boron carbide and boron, (c) maintaining said temperature for a time sufficient to permit infiltration of molten parent metal into said mass and to permit reaction of said molten parent metal with said boron carbide and boron to form parent metal boron-containing compounds, and (d) continuing said infiltration and reaction for a time sufficient to produce said self-supporting body comprising a metallic phase of unreacted constituents of the parent metal and parent metal boron-containing compounds.

24. The method according to Claim 23 including admixing an inert filler with said mass, permitting said infiltration and reaction into said formed mass to embed said filler, and producing a composite as said self-supporting body having a matrix embedding said filler, said matrix comprising a metallic phase of unreacted constituents of the parent metal and parent metal boron-containing compounds.

25. The method according to Claim 23 or Claim 24 wherein said parent metal comprises aluminum and said boron-containing compound comprises a material selected from the group consisting of aluminum boride, aluminum boro carbide, and mixtures thereof.

26. The method according to Claim 1 or Claim 2 wherein carbon is incorporated into said mass for reaction with said parent metal.

27. The method of Claim 26 wherein said carbon comprises from about 5 to 10 percent by weight of said mass.

28. The method according to Claim 26 or Claim 27 wherein said carbon comprises elemental carbon selected from the group consisting of carbon black or graphite.

29. The method according to any of Claims 1 to 3 wherein said self-supporting body comprises some residual unreacted boron carbide.

30. The method according to Claim 5 or Claim 29 wherein said self-supporting body further comprises from about 1 volume percent to about 25 volume percent porosity.

31. The method according to any of the preceding Claims, further comprising holding the formed self-supporting body at high temperature after infiltration is complete.

32. The method according to Claim 31 wherein said high temperature treatment results in at least some densification of the self-supporting body by a sintering process.

33. A composite material comprising at least one metal phase selected from the group consisting of zirconium, titanium and hafnium, and a three-dimensionally interconnected ceramic phase extending to the boundaries of said composite material. said ceramic phase comprising at least one carbide selected from the group consisting of a carbide of zirconium, a carbide of titanium, and a carbide of hafnium, and further comprising a boride of the metal corresponding to said carbide, said boride having a platelet-like structure.

34. The composite material of Claim 33 wherein said metal phase comprises zirconium, said carbide comprises a carbide of zirconium, and said boride comprises a boride of zirconium.

35. The composite material of Claim 34, said composite material possessing a fracture toughness of at least about 12 MPa·m^{1/2}.

## Patentansprüche

1. Verfahren zur Herstellung eines selbsttragenden Körpers, das umfaßt: (a) Auswählen eines Grundmetalls, (b) Erhitzen des genannten Grundmetalls in einer im wesentlichen inerten Atmosphäre auf eine Temperatur oberhalb seines Schmelzpunkts, um einen Körper aus schmelzflüssigem Metall zu erzeugen, und Inberührungbringen des genannten Körpers aus schmelzflüssigem Grundmetall mit einer Masse, die Borcarbid enthält, (c) Halten der genannten Temperatur für eine Zeit, die ausreicht, eine Infiltration von schmelzflüssigem Grundmetall in die genannte Masse zu gestatten und eine Umsetzung von schmelzflüssigem Grundmetall mit dem genannten Borcarbid zu ermöglichen, um eine oder mehrere borhaltige Verbindungen zu bilden, und (d) Fortsetzen der genannten Infiltration und Umsetzung für eine Zeit, die ausreicht, den genannten selbsttragenden Körper zu erzeugen, der eine oder mehrere Grundmetall/Bor enthaltende Verbindungen umfaßt.

2. Verfahren nach Anspruch 1, das ein Formen der genannten Masse einschließt, indem man das genannte Borcarbid mit einem inerten Füllstoff vermischt, sowie ein Ablaufenlassen der genannten Infiltration und Umsetzung in die genannte gebildete Masse hinein, um den genannten Füllstoff einzubetten, sowie das Erzeugen des genannten selbsttragenden Körpers als ein Verbundkörper.

3. Verfahren nach Anspruch 1 oder Anspruch 2, bei dem der genannte Körper eine metallische Phase einschließt.

4. Verfahren nach Anspruch 1 oder Anspruch 2, bei dem der genannte selbsttragende Körper eine Grundmetallborid-Verbindung und eine Grundmetall-Kohlenstoff-Verbindung aufweist, die bei der Reaktion des genannten Borcarbids mit dem genannten Grundmetall gebildet werden.

5. Verfahren nach Anspruch 1 oder Anspruch 2, bei dem das genannte Borcarbid in einer wenigstens stöchiometrischen Menge bezogen auf das Grundmetall vorliegt, das in die genannte Masse infiltriert wird, und bei dem die genannte Umsetzung für eine ausreichende Zeit fortgesetzt wird, um im wesentlichen das gesamte Grundmetall zu verbrauchen.

6. Verfahren nach Anspruch 1 oder Anspruch 2, bei dem das genannte Grundmetall wenigstens ein Metall umfaßt, das aus der Gruppe ausgewählt ist, die aus Aluminium, Titan, Zirconium, Silicium, Hafnium, Lanthan, Eisen, Calcium, Vanadium, Niob und Beryllium besteht.

7. Verfahren nach Anspruch 4, bei dem das genannte Grundmetall wenigstens ein Metall umfaßt, das aus der Gruppe ausgewählt ist, die aus Aluminium, Titan, Zirconium und Hafnium besteht.

8. Verfahren nach Anspruch 1 oder Anspruch 2, bei dem das genannte Grundmetall Aluminium umfaßt, und bei dem der genannte selbsttragende Körper eine Aluminiumverbindung umfaßt, die aus der Gruppe ausgewählt ist, die aus Aluminiumborid, einem Aluminiumborcarbid und Mischungen davon besteht.

9. Verfahren nach Anspruch 1 oder Anspruch 2, bei dem das genannte Grundmetall Zirconium umfaßt und bei dem der genannte selbsttragende Körper eine Zirconiumverbindung umfaßt, die aus der Gruppe ausgewählt ist, die aus einem Borid des Zirconiums oder einer Mischung aus einem Borid des Zirconiums mit einem Carbid des Zirconiums besteht.

10. Verfahren nach Anspruch 9, bei dem der genannte selbsttragende Körper auch Zirconium enthält.

11. Verfahren nach Anspruch 1 oder Anspruch 2, bei dem die genannte Masse eine Vorform einer vorgegebenen Form ist und die genannte Infiltration und Umsetzung in die genannte Vorform hinein einen selbsttragenden Körper erzeugt, der die Konfiguration der genannten Vorform aufweist.

12. Verfahren nach Anspruch 2, bei dem der genannte Füllstoff wenigstens einen Füllstoff umfaßt, der aus der Gruppe ausgewählt ist, die aus Fasern, Whiskers, teilchenförmigen Stoffen, Pulvern, Stäben, Drähten, Drahtgewebe, Feuerfestgewebe, einem retikulierten Schaum, Platten, Plättchen, festen Kügelchen und hohlen Kügelchen besteht.

13. Verfahren nach Anspruch 11, bei dem der genannte Füllstoff einen vorher gebildeten Schutzüberzug aufweist.

14. Verfahren nach Anspruch 2 oder Anspruch 13, bei dem der genannte Füllstoff wenigstens einen Füllstoff umfaßt, der aus der Gruppe ausgewählt ist, die aus Aluminiumoxid oder Kohlenstoff mit einem vorher aufgebrachten Schutzüberzug besteht.

15. Verfahren nach Anspruch 1 oder Anspruch 2, bei dem das genannte Grundmetall Titan umfaßt, und der genannte selbsttragende Körper eine Titanverbindung umfaßt, die aus der Gruppe ausgewählt ist, die aus einem Borid des Titans und einer Mischung eines Borids des Titans mit einem Carbid des Titans besteht.

16. Verfahren nach Anspruch 1 oder Anspruch 2, bei dem das genannte Grundmetall Hafnium umfaßt, und der genannte selbsttragende Körper eine Hafniumverbindung umfaßt, die aus der Gruppe ausgewählt ist, die aus einem Borid des Hafniums und einer Mischung eines Borid des Hafniums mit einem Carbid des Hafniums besteht.

17. Verfahren nach Anspruch 15, bei dem der genannte selbsttragende Körper auch Titan einschließt.

18. Verfahren nach Anspruch 16, bei dem der genannte selbsttragende Körper auch Hafnium einschließt.

19. Verfahren nach Anspruch 1 oder Anspruch 2, bei dem wenigstens eine von den genannten Grundmetall/Bor enthaltenden Verbindungen eine blättchenartige Struktur zeigt.

20. Verfahren nach Anspruch 9, bei dem das genannte Borid des Zirconiums eine blättchenartige Struktur zeigt.

21. Verfahren nach Anspruch 15, bei dem das genannte Borid des Titans eine blättchenartige Struktur zeigt.

22. Verfahren nach Anspruch 16, bei dem das genannte Borid des Hafniums eine blättchenartige Struktur zeigt.

23. Verfahren zur Herstellung eines selbsttragenden Körpers, das umfaßt: (a) Auswählen eines Grundmetalls, (b) Erhitzen des genannten Grundmetalls in einer im wesentlichen inerten Atmosphäre auf eine Temperatur oberhalb seines Schmelzpunkts, um einen Körper aus schmelzflüssigem Metall zu bilden, und Inberührungbringen des genannten Körpers aus schmelzflüssigem Grundmetall mit einer Masse, die Borcarbid und Bor umfaßt, (c) Halten der genannten Temperatur für eine Zeit, die ausreicht, eine Infiltration des schmelzflüssigem Grundmetalls in die genannte Masse zu ermöglichen und eine Reaktion des genannten schmelzflüssigen Grundmetalls mit dem genannten Borcarbid und Bor zu ermöglichen, um Grundmetall/Bor enthaltende Verbindungen zu bilden und (d) Fortsetzen der genannten Infiltration und Reaktion für eine Zeit, die ausreicht, um den genannten selbsttragenden Körper herzustellen, der eine metallische Phase aus nicht umgesetzten Bestandteilen des Grundmetalls sowie Grundmetall/Bor enthaltende Verbindungen aufweist.

24. Verfahren nach Anspruch 23, das das Vermischen eines inerten Füllstoffs mit der genannten Masse, das Ablaufenlassen der Infiltration und Reaktion in die genannte gebildete Masse hinein, um den genannten Füllstoff einzubetten, sowie die Erzeugung des genannten selbsttragenden Körpers als ein Verbundkörper einschließt, der eine Matrix aufweist, die den genannten Füllstoff einbettet, wobei die genannte Matrix eine metallische Phase aus unumgesetzten Bestandteilen des Grundmetalls sowie Grundmetall/Bor enthaltende Verbindungen umfaßt.

25. Verfahren nach Anspruch 23 oder 24, bei dem das genannte Grundmetall Aluminium umfaßt und die genannte borhaltige Verbindung ein Material umfaßt, das aus der Gruppe ausgewählt ist, die aus Aluminiumborid, Aluminiumborcarbid und Mischungen davon besteht.

26. Verfahren nach Anspruch 1 oder Anspruch 2, bei dem zur Umsetzung mit dem genannten Grundmetall Kohlenstoff in die genannte Masse eingearbeitet wird.

27. Verfahren nach Anspruch 26, bei dem der genannte Kohlenstoff von etwa 5 bis 10 Gew.-% der genannten Masse ausmacht.

28. Verfahren nach Anspruch 26 oder Anspruch 27, bei dem der genannte Kohlenstoff elementaren Kohlenstoff umfaßt, der aus der Gruppe ausgewählt ist, die aus Ruß oder Graphit besteht.

29. Verfahren nach irgendeinem der Ansprüche 1 bis 3, bei dem der genannte selbsttragende Körper eine gewisse Menge restliches unumgesetztes Borcarbid enthält.

30. Verfahren nach Anspruch 5 oder Anspruch 29, bei dem der genannte selbsttragende Körper außerdem von etwa 1 Vol.-% bis etwa 25 Vol.-% Porosität aufweist.

31. Verfahren nach irgendeinem der vorausgehenden Ansprüche, das außerdem das Halten des gebildeten selbsttragenden Körpers bei hoher Temperatur umfaßt, nachdem die Infiltration abgeschlossen ist.

32. Verfahren nach Anspruch 31, bei dem die genannte Hochtemperaturbehandlung wenigstens zu einer gewissen Verdichtung des selbsttragenden Körpers durch einen Sinterprozeß führt.

33. Verbundmaterial, das wenigstens eine Metallphase aufweist, die aus der Gruppe ausgewählt ist, die aus Zirconium, Titan und Hafnium besteht, sowie eine dreidimensional untereinander verbundene keramische Phase, die sich bis zu den Grenzen des genannten Verbundmaterials erstreckt, wobei die genannte keramische Phase wenigstens ein Carbid aufweist, das aus der Gruppe ausgewählt ist, die aus einem Carbid des Zirconiums, einem Carbid des Titans und einem Carbid des Hafniums besteht, und die außerdem ein Borid des Metalls aufweist, das dem genannten Carbid entspricht, wobei das genannte Borid eine blättchenartige Struktur aufweist.

34. Verbundmaterial nach Anspruch 33, bei dem die genannte Metallphase Zirconium umfaßt, das genannte Carbid ein Carbid des Zirconiums umfaßt und das genannte Borid ein Borid des Zirconiums umfaßt.

35. Verbundmaterial nach Anspruch 34, wobei das genannte Verbundmaterial eine Bruchzähigkeit von wenigstens etwa 12 MPa.m^{1/2} besitzt.

## Revendications

1. Procédé de fabrication d'un corps autoportant, qui comprend : (a) le choix d'un métal-mère, (b) le chauffage de ce métal-mère dans une atmosphère principalement inerte jusqu'à une température au-dessus de son point de fusion pour former un corps de métal fondu et la mise en contact de ce corps de métal-mère fondu avec une masse comprenant du carbure de bore, (c) le maintien de ladite température pendant une durée suffisante pour permettre l'infiltration du métal-mère fondu dans ladite masse et pour permettre la réaction du métal-mère fondu avec le carbure de bore de manière à former un ou plusieurs composés contenant du bore, et (d) la poursuite de l'infiltration et de la réaction pendant une durée suffisante pour produire le corps autoportant compenant un ou plusieurs composés du métal-mère contenant du bore.

2. Procédé suivant la revendication 1, qui comprend les étapes consistant à former ladite masse par mélange du carbure de bore avec une charge inerte, à permettre l'infiltration et la réaction dans la masse ainsi formée pour noyer ladite charge et à produire un composite constituant le corps autoportant en question.

3. Procédé suivant la revendication 1 ou la revendication 2, dans lequel le corps comprend une phase métallique.

4. Procédé suivant la revendication 1 ou la revendication 2, dans lequel le corps autoportant comprend un borure du métal-mère et un composé carboné du métal-mère formés par réaction du carbure de bore et du métal-mère.

5. Procédé suivant la revendication 1 ou la revendication 2, dans lequel le carbure de bore est présent en une quantité au moins stoechiométrique par rapport au métal-mère s'étant infiltré dans ladite masse, et la réaction est poursuivie pendant une durée suffisante pour consommer la quasi-totalité du métal-mère.

6. Procédé suivant la revendication 1 ou la revendication 2, dans lequel le métal-mère comprend au moins un métal choisi dans le groupe constitué de l'aluminium, du titane, du zirconium, du silicium, du hafnium, du lanthane, du fer, du calcium, du vanadium, du niobium et du béryllium.

7. Procédé suivant la revendication 4, dans lequel le métal-mère comprend au moins un métal choisi dans le groupe constitué de l'aluminium, du titane, du zirconium et du hafnium.

8. Procédé suivant la revendication 1 ou la revendication 2, dans lequel le métal-mère comprend de l'aluminium et le corps autoportant comprend un composé d'aluminium choisi dans le groupe constitué du borure d'aluminium, d'un borocarbure d'aluminium et de leurs mélanges.

9. Procédé suivant la revendication 1 ou la revendication 2, dans lequel le métal-mère comprend du zirconium et le corps autoportant comprend un composé de zirconium choisi dans le groupe constitué d'un borure de zirconium ou d'un mélange d'un borure de zirconium et d'un carbure de zirconium.

10. Procédé suivant la revendication 9, dans lequel le corps autoportant contient aussi du zirconium.

11. Procédé suivant la revendication 1 ou la revendication 2, dans lequel la masse est une préforme de configuration prédéterminée et l'infiltration et la réaction dans la préforme produisent un corps autoportant ayant la configuration de la préforme.

12. Procédé suivant la revendication 2, dans lequel la charge comprend au moins une charge choisie dans le groupe constitué de fibres, de trichites, de particules, de poudres, de bâtonnets, de fils, de toile métallique, de toile réfractaire, de mousse réticulée, de plaquettes, de paillettes, de sphères pleines et de sphères creuses.

13. Procédé suivant la revendication 11, dans lequel la charge porte un revêtement préalable protecteur.

14. Procédé suivant la revendication 2 ou la revendication 13, dans lequel la charge comprend au moins une charge choisie dans le groupe constitué de l'alumine ou du carbone avec un revêtement préalable protecteur.

15. Procédé suivant la revendication 1 ou la revendication 2, dans lequel le métal-mère comprend du titane, et le corps autoportant comprend un composé de titane choisi dans le groupe constitué d'un borure de titane et d'un mélange de borure de titane et d'un carbure de titane.

16. Procédé suivant la revendication 1 ou la revendication 2, dans lequel le métal-mère comprend du hafnium et le corps autoportant comprend un composé de hafnium choisi dans le groupe constitué d'un borure de hafnium et d'un mélange de borure de hafnium et d'un carbure de hafnium.

17. Procédé suivant la revendication 15, dans lequel le corps autoportant contient aussi du titane.

18. Procédé suivant la revendication 16, dans lequel le corps autoportant contient aussi du hafnium.

19. Procédé suivant la revendication 1 ou la revendication 2, dans lequel au moins l'un des composés du métal-mère contenant du bore présente une structure en paillettes.

20. Procédé suivant la revendication 9, dans lequel le borure de zirconium présente une structure en paillettes.

21. Procédé suivant la revendication 15, dans lequel le borure de titane présente une structure en paillettes.

22. Procédé suivant la revendication 16, dans lequel le borure de hafnium présente une structure en paillettes.

23. Procédé de production d'un corps autoportant, comprenant : (a) le choix d'un métal-mère, (b) le chauffage de ce métal-mère dans une atmosphère principalement inerte jusqu'à une température au-dessus de son point de fusion pour former un corps de métal fondu, et la mise en contact de ce corps de métal-mère fondu avec une masse comprenant du carbure de bore et du bore, (c) le maintien de cette température pendant une durée suffisante pour permettre l'infiltration du métal-mère fondu dans la masse et pour rendre possible la réaction du métal-mère fondu avec le carbure de bore et le bore pour former des composés du métal-mère contenant du bore, et (d) la poursuite de l'infiltration et de la réaction pendant une durée suffisante pour produire le corps autoportant comprenant une phase métallique de constituants du métal-mère n'ayant pas réagi et de composés du métal-mère contenant du bore.

24. Procédé suivant la revendication 23, qui consiste à mélanger une charge inerte avec la masse, à permettre l'infiltration et la réaction dans la masse formée pour enrober ladite charge et à produire un composite comme corps autoportant ayant une matrice enrobant ladite charge, cette matrice comprenant une phase métallique de constituants n'ayant pas réagi du métal-mère et de composés du métal-mère contenant du bore.

25. Procédé suivant la revendication 23 ou la revendication 24, dans lequel le métal-mère comprend l'aluminium et le composé contenant du bore comprend une matière choisie dans le groupe constitué du borure d'aluminium, du borocarbure d'aluminium et de leurs mélanges.

26. Procédé suivant la revendication 1 ou la revendication 2, dans lequel du carbone est incorporé dans la masse en vue de la réaction avec le métal-mère.

27. Procédé suivant la revendication 26, dans lequel le carbone constitue environ 5 à 10 % en poids de la masse.

28. Procédé suivant la revendication 26 ou la revendication 27, dans lequel le carbone comprend du carbone élémentaire choisi dans le groupe constitué du noir de carbone ou du graphite.

29. Procédé suivant l'une quelconque des revendications 1 à 3, dans lequel le corps autoportant comprend du carbure de bore résiduel n'ayant pas réagi.

30. Procédé suivant la revendication 5 ou la revendication 29, dans lequel le corps autoportant comprend en outre environ 1 à environ 25 % en volume de pores.

31. Procédé suivant l'une quelconque des revendications précédentes, comprenant en outre le maintien à haute température du corps autoportant formé, lorsque l'infiltration est terminée.

32. Procédé suivant la revendication 31, dans lequel le traitement à haute température a au moins pour résultat une certaine densification par un processus de frittage du corps autoportant.

33. Matière composite comprenant au moins une phase métallique choisie dans le groupe constitué du zirconium, du titane et du hafnium et une phase céramique à interconnexion tridimensionnelle s'étendant jusqu'aux limites de la matière composite, cette phase céramique comprenant au moins un carbure choisi dans le groupe constitué d'un carbure de zirconium, d'un carbure de titane et d'un carbure de hafnium et comprenant en outre un borure du métal correspondant au carbure en question, ce borure ayant une structure en paillettes.

34. Matière composite suivant la revendication 33, dans laquelle la phase métallique comprend du zirconium, le carbure comprend un carbure de zirconium et le borure comprend un borure de zirconium.

35. Matière composite suivant la revendication 34, possédant une ténacité à la rupture d'au moins environ 12 MPa.m^{1/2}.
